(19) Europäisches Patentamt / European Patent Office / Office européen des brevets

(11) **EP 2 993 534 A1**

(12) **DEMANDE DE BREVET EUROPEEN**

(43) Date de publication:
**09.03.2016 Bulletin 2016/10**

(51) Int Cl.:
*G04C 3/14* (2006.01)     *H02P 8/02* (2006.01)

(21) Numéro de dépôt: **14183786.4**

(22) Date de dépôt: **05.09.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(71) Demandeur: **EM Microelectronic-Marin SA 2074 Marin (CH)**

(72) Inventeurs:
• **Godat, Yves 2087 Cornaux (CH)**
• **Jeannet, Nicolas 2019 Chambrelien (CH)**

(74) Mandataire: **Tournel, Maxime Jean-Joseph et al ICB Ingenieurs Conseils en Brevets Fbg de l'Hopital 3 2001 Neuchatel (CH)**

(54) **Circuit détecteur de chocs**

(57) La présente invention concerne un dispositif électronique (1) comprenant une unité de calcul (5) capable de générer un signal représentatif d'une grandeur physique, d'un moteur (4) entraînant un dispositif d'affichage, ledit moteur comprenant deux bornes (Mot1, Mot2), positive et négative, par lesquelles l'unité de calcul le commande, le dispositif électronique comprenant en outre au moins un circuit de détection de chocs (7) connecté entre l'unité de calcul et une borne du moteur pour la détection d'un choc externe appliqué au moteur, caractérisé en ce que le circuit de détection de chocs comprend une partie comparaison (72) pour comparer une tension induite générer au niveau du moteur suite à un choc à une tension de référence prédéterminée (Vref) afin de déterminer un choc, le circuit de détection comprenant en outre une partie de sélection.

Fig. 2

EP 2 993 534 A1

**Description**

La présente invention concerne un dispositif électronique comprenant une unité de calcul capable de générer un signal représentatif d'une grandeur physique, d'un moteur entraînant un dispositif d'affichage, ledit moteur comprenant deux bornes, positive et négative, par lesquelles l'unité de calcul le commande, le dispositif électronique comprenant en outre au moins un circuit de détection de chocs connecté entre l'unité de calcul et une borne du moteur pour la détection d'un choc externe appliqué au moteur

ARRIERE PLAN TECHNOLOGIQUE

Il est connu des pièces d'horlogeries comprenant un boitier dans lequel un mouvement d'horlogerie électromécanique est agencé. Un tel mouvement est cadencé par un système oscillateur à quartz. Pour l'affichage des indications horaires telles que l'heure et la seconde, des aiguilles sont montées sur des moteurs pour être entraînées en rotation. Les moteurs utilisés sont des moteurs de type Lavet appelés aussi moteurs pas à pas. Dans ces moteurs, un rotor aimanté de forme cylindrique crée un champ magnétique radial dans l'entrefer d'un circuit magnétique sur lequel est enroulée une bobine dont les bornes sont connectées à un circuit de commande, généralement un circuit intégré, fournissant des impulsions de courant, chaque impulsion faisant avancer le rotor d'un pas. La bobine est constituée par un fil très fin enroulé sur un tube isolant creux contenant à l'intérieur une partie du circuit magnétique.

Ces moteurs situés dans la montre subissent des chocs pouvant venir de chutes de la montre ou encore de mouvements violents de l'utilisateur. Ces chocs sont alors susceptibles de perturber le fonctionnement des moteurs. Ces perturbations consistent en un déplacement non contrôlé du ou des rotors dû à leur inertie provoquant le saut d'au moins un pas.

Par conséquent, les indications horaires fournies par les aiguilles risquent de ne plus être exactes.

Pour remédier à cela, il existe des systèmes de détection de chocs. Pour cela, un dispositif électronique se charge de mesurer la tension induite par le moteur lors du choc. En effet, sous l'effet de l'inertie du rotor, une tension induite est générée. Cette tension induite est détectée par un circuit de détection qui compare cette tension induite à un seuil prédéterminé. Si celle tension est supérieure audit seuil, le circuit de détection en déduit qu'un choc est survenu et transmet l'information à une unité de commande.

En réponse à ce choc, l'unité de commande envoie audit moteur une impulsion de blocage utilisée pour bloquer la rotation du rotor due au choc.

Or, pour la mesure de la tension induite, un inverseur sous une tension régulée est utilisé. Afin d'augmenter la sensibilité, la bobine du moteur est court-circuitée pendant un court instant augmentant ainsi la tension aux bornes de la bobine du moteur grâce à l'effet self du moteur delta(U)=L*(di/dt) et automatiquement le courant augmente. Une telle augmentation peut entraîner l'apparition de dégâts.

RESUME DE L'INVENTION

L'invention a pour but de pallier les inconvénients de l'art antérieur en proposant de fournir un dispositif de détection de chocs d'un moteur permettant une détection d'un choc de manière plus rapide et plus précise.

A cet effet, la présent invention concerne un dispositif électronique comprenant une unité de calcul capable de générer un signal représentatif d'une grandeur physique, d'un moteur entraînant un dispositif d'affichage, ledit moteur comprenant deux bornes, positive et négative, par lesquelles l'unité de calcul le commande, le dispositif électronique comprenant en outre au moins un circuit de détection de chocs connecté entre l'unité de calcul et une borne du moteur pour la détection d'un choc externe appliqué au moteur, caractérisé en ce que le circuit de détection de chocs comprend une partie comparaison pour comparer une tension induite générée au niveau du moteur suite à un choc à une tension de référence prédéterminée afin de déterminer un choc, le circuit de détection comprenant en outre une partie de sélection afin de faire varier la tension induite pour améliorer la sensibilité dudit circuit détecteur de chocs.

Un avantage de cette invention est qu'elle permet la détection de niveaux positifs ou négatifs.

Dans un premier mode de réalisation avantageux, le dispositif électronique comprend deux circuits de détection de chocs connectés chacun entre l'unité de calcul et une borne du moteur pour la détection d'un choc externe appliqué au moteur, un circuit de détection de chocs étant connecté à la borne positive alors que l'autre est connecté à la borne négative.

Dans un second mode de réalisation avantageux, la partie de comparaison comprend un comparateur munie d'une entrée positive et d'une entrée négative, la partie de sélection comprenant une série de résistances Ri connectées en série, la première de ces résistances étant connectée à la borne de connexion du moteur alors que la dernière résistance de la série est connectée à la masse, la partie de sélection comprenant en outre un sélecteur comportant une sortie relié à l'entrée positive de la partie comparaison et une pluralité de points de sélection pi, chacun étant associé à une résistance Ri.

Dans un troisième mode de réalisation avantageux, la partie de sélection comprend en outre un transistor d'activation en série de la série de résistance (Ri) permettant l'activation ou la désactivation dudit circuit de détection de chocs.

Dans un autre mode de réalisation avantageux, la tension de référence prédéterminée est connectée à la borne négative de la partie comparaison.

Dans un autre mode de réalisation avantageux, la tension de référence prédéterminée est négative ou positive.

Dans un autre mode de réalisation avantageux, la partie comparaison comporte une première paire et une seconde paire de transistors montés en série, chaque paire comprenant un transistor de type P et un transistor de type N, les grilles des transistors de même type étant reliées ensembles, les grilles des transistors de type P étant connectées à une source de courant, la grille du transistor de type N de la première paire étant connectée à son drain, les drains des transistors de type P étant connectés à une tension d'alimentation (Vdd), la source du transistor de type n de la première paire étant connectée à la sortie de la partie de sélection alors que le drain du transistor de type n de la seconde paire est connecté à la masse.

BREVE DESCRIPTION DES FIGURE

Les buts, avantages et caractéristiques de l'invention apparaîtront plus clairement dans la description détaillée suivante d'au moins une forme de réalisation de l'invention donnée uniquement à titre d'exemple non limitatif et illustrée par les dessins annexés sur lesquels :

- La figure 1 représente un schéma du dispositif électronique selon l'invention;
- Les figures 2 et 6 représentent une vue schématique du dispositif électronique selon l'invention;
- Les figures 3 et 5 représentent une vue détaillée d'un circuit de détection de chocs selon l'invention et d'une de ses variantes;
- La figure 4 représente des diagrammes de fonctionnement du dispositif électronique selon l'invention;

DESCRIPTION DETAILLEE

La présente invention procède de l'idée générale de fournir un dispositif de détection de chocs d'un moteur permettant une détection d'un choc de manière plus rapide et plus précise.

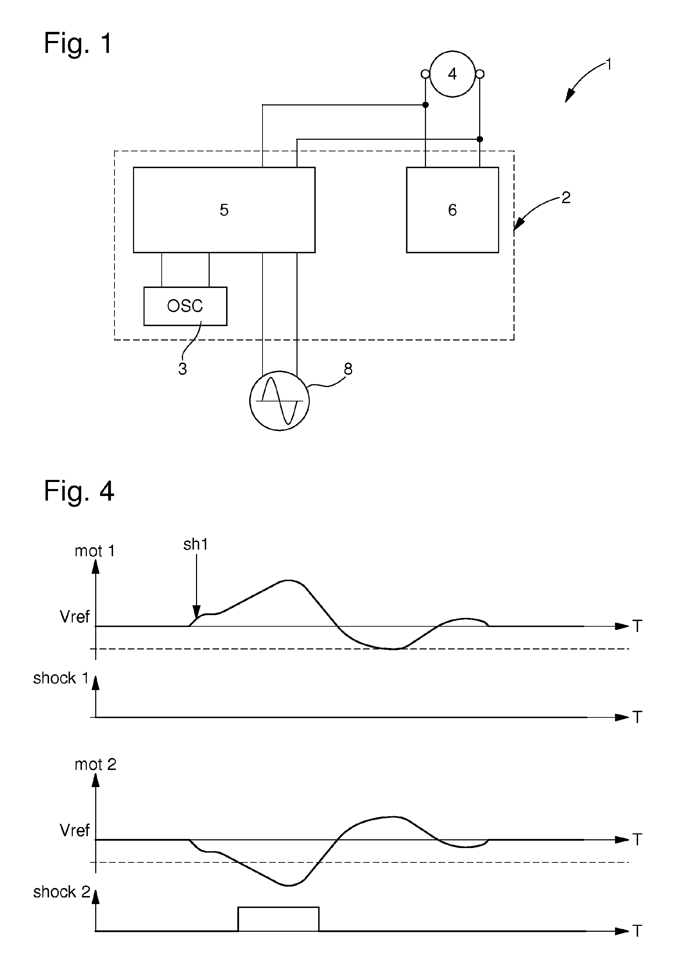

Sur la figure 1 est représentée une vue schématique d'un mouvement électronique. Ce mouvement ou dispositif électronique 1 comprend un module de commande 2 cadencé par un système oscillateur 3 à quartz. Pour l'affichage des indications horaires telles que l'heure et la seconde, des aiguilles sont montées sur des moteurs 4 pour être entraînées en rotation. Les moteurs utilisés sont des moteurs Lavet appelés aussi moteurs pas à pas et comprennent deux bornes de connexion Mot1, Mot2. Dans ces moteurs, un rotor 4a aimanté de forme cylindrique crée un champ magnétique radial dans l'entrefer d'un circuit magnétique 4b sur lequel est enroulée une bobine dont les bornes sont connectées au module de commande, généralement un circuit intégré, fournissant des impulsions de courant, chaque impulsion faisant avancer le rotor d'un pas. La bobine est constituée par un fil très fin enroulé sur un tube isolant creux contenant à l'intérieur une partie du circuit magnétique. Ce module de commande 2 comprend généralement une unité de calcul 5. Le tout est alimenté par une unité d'alimentation 8 telle une pile ou une batterie. Cette unité d'alimentation fournissant une tension d'alimentation Vdd. Une masse Vss est également prévue.

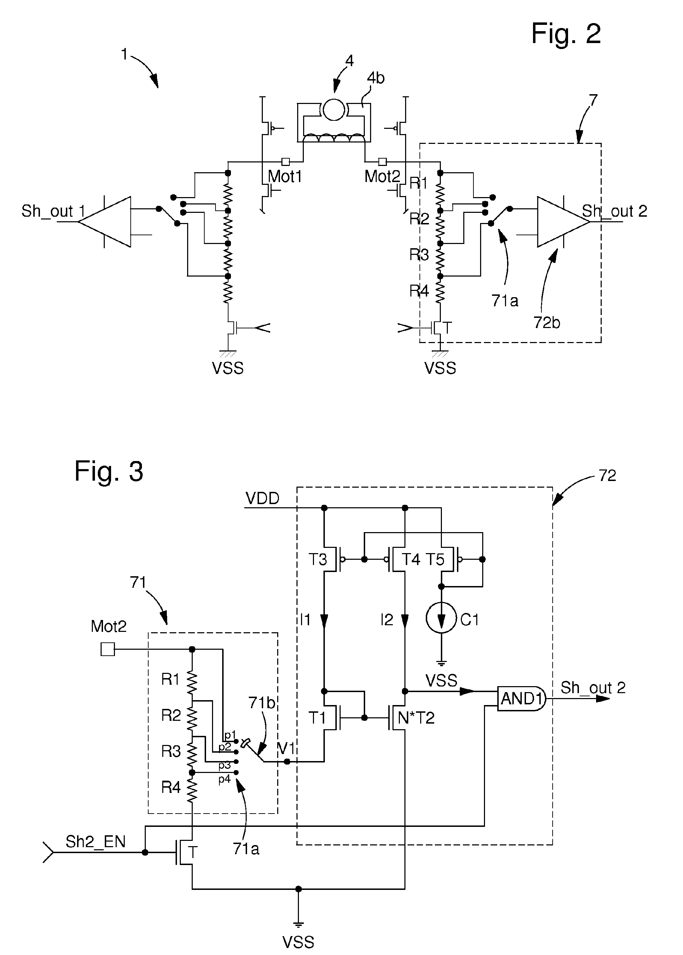

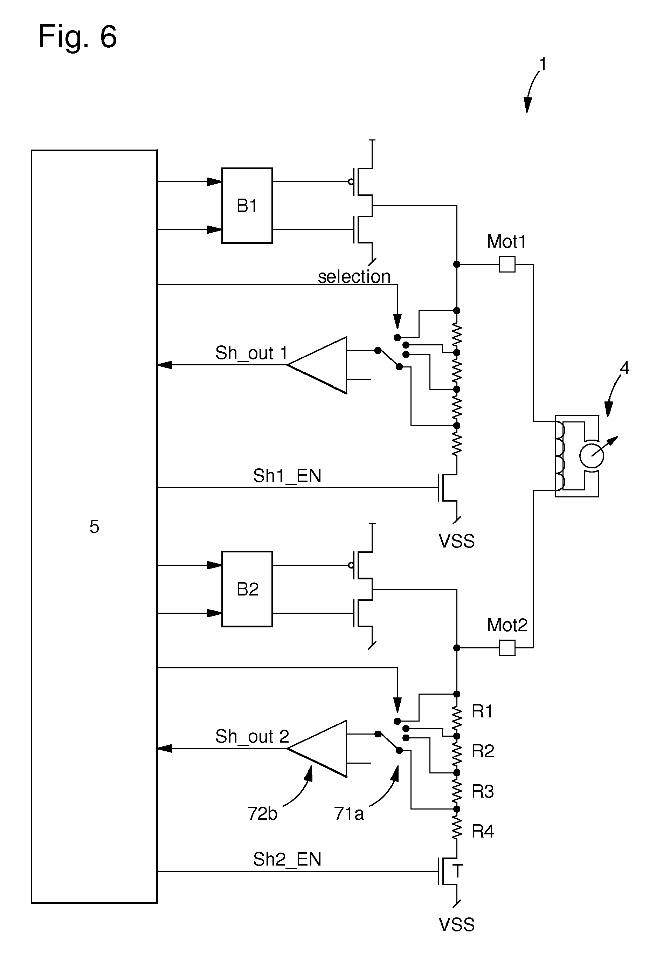

Avantageusement selon l'invention, le module de commande 2, visible à la figure 2, comprend en outre une unité de détection 6 comprenant au moins un circuit de détection de chocs 7. Ce circuit de détection de chocs 7 est utilisé afin de déterminé si un choc est apparu. Ainsi, si un choc est détecté, le module de commande 2 peut agir en conséquence et envoyé une impulsion de blocage pour empêcher le rotor d'entrer en rotation. Le circuit de détection de chocs est placé en sortie d'au moins une des bornes du moteur. Dans la suite de la description, l'exemple d'un circuit de détection de chocs 7 connecté à la borne négative Mot2 du moteur sera pris. A chaque borne Mot1, Mot2 du moteur, une tension Vmot est mesurée. Au niveau de chaque borne Mot1, Mot2, un buffer moteur est agencé, ces buffers moteurs comprennent une bascule B1, B2 et deux transistors de type différent montés en série, les grilles de ces transistors étant connectées à la bascule comme visible à la figure 6. Ces buffers servent à faire passer un courant soit positif, soit négatif dans la bobine du moteur afin de le faire tourner.

A la figure 2, on constate que le circuit de détection de chocs 7 comprend une partie de sélection 71 connectée directement à la borne Mot 2 du moteur 4. Cette partie de sélection 71 possède une sortie connectée à une partie de comparaison 72. Cette partie de comparaison 72 est connectée à l'unité de calcul 5 de sorte à fournir le signal indiquant si un choc est détecté ou pas.

A la figure 3, une représentation détaillée de l'unité de détection est représentée.

La partie de sélection comprend une série de résistance Ri connectées en série. La première de ces résistances Ri est connectée à la borne de connexion du moteur 4 alors que la dernière résistance Ri de la série est connectée à une borne d'un transistor T, plus particulièrement à son drain. De préférence, la série de résistances Ri comprendra quatre résistances R1, R2, R3 et R4.

Ce transistor T voie sa source connectée à la masse Vss et sa grille connectée à l'unité de calcul 5 du module de commande 2. Ce transistor T est utilisé pour activer ou désactiver le circuit de détection de chocs 7. En effet, selon la tension d'un signal Shi_EN appliqué sur la grille de ce transistor, celui-ci sera ouvert ou fermé. Dans le cas où il est ouvert, ce transistor T empêche le circuit de détection de chocs 7 de fonctionner car le circuit électrique est ouvert et inversement. Pour le circuit de détection connecté à la borne Mot1 du moteur, le signal Sh1_EN permettra d'activer ou de désactiver ce circuit de détection de chocs 7. Pour le circuit de détection connecté à la borne Mot2 du moteur, le signal Sh2_EN permettra d'activer ou de désactiver ce circuit de détection de chocs 7.

La partie sélection 71 comprend en outre un sélecteur 71 a se présentant sous la forme d'un interrupteur multi-position. Ce sélecteur 71 a comporte une sortie V1 et une pluralité de points de sélection pi, chacun étant associé à une résistance Ri. Le premier point de sélection p1 est associé à la résistance R1 au niveau de la borne de la résistance R1 reliée au moteur. Le second point de sélection p2 est associé à la résistance R2 au niveau de la borne de la résistance R2 reliée à la résistance R2 et ainsi de suite.

Le sélecteur 71 a comporte en outre une bascule 71 b permettant de connecter la sortie du sélecteur avec un des points de sélection pi. La sortie du sélecteur 71 a est la tension V1 qui est connectée à la partie de comparaison 72. Cette partie de comparaison 72 comprend un comparateur dont l'entrée positive est reliée à la sortie du sélecteur 71 a et dont l'entrée négative est reliée à la grille du transistor T permettant l'activation ou la désactivation du circuit de détection de chocs 7. On comprend alors que le signal appliqué à la grille dudit transistor T est un signal digital dont la tension sera la tension d'alimentation Vdd ou la masse Vss et qu'il permet l'enclenchement du comparateur.

Le comparateur 72b de la partie comparaison 72 est composé d'un premier T1 et d'un second T2 transistor de type N dont les grilles sont reliées ensemble. La source du premier transistor T1 est connectée à la sortie du sélecteur 71 a alors que la grille du premier transistor T1 est reliée à son drain. La source du second transistor de type N T2 est connectée à la masse et à la source du transistor T de la partie sélection 71 a.

Les drains du premier transistor T1 et du second transistor T2 sont respectivement connectés au drain du troisième transistor T4 et au drain du quatrième transistor T4, le troisième transistor T3 et le quatrième transistor T4 étant du type P. Les transistors T3 et T4 ont leurs grilles connectées ensemble et leurs drains connectés à la tension d'alimentation Vdd. Le transistor T3 fournit un courant I1 et le transistor T4 fournit un courant I2.

Le comparateur de la partie comparaison comprend en outre une source de courant C1 connectée en série avec un cinquième transistor T5, de type P. Le drain du cinquième transistor T5 est connecté à la tension d'alimentation Vdd alors que la grille de ce transistor T5 est connectée à sa source et aux grilles des transistors T3 et T4.

Il est prévu que les transistors T3 et T4 soient identiques de sorte que le courant I1 soit identique au courant I2.

Les transistors T1 et T2 sont de mêmes dimensions et sont agencés pour être en faible inversion. Toutefois, il est prévu que le transistor T2 soit placé un nombre N de fois en parallèle. Le transistor T2 est donc composé d'un nombre N de transistors connectés en parallèle.

Cette partie comparaison comprend en outre une porte logique ET appelé AND1 ayant deux entrées : une première étant connectée au drain du transistor T2 alors que la deuxième entrée est connectée à la grille du transistor T de la partie sélection.

En mode faible inversion, l'équation d'un transistor est :

$$I = Is \times e^{(Vgs/(n \times Ut))} \implies Vgs = n \times Ut \times \ln(\frac{I}{Is})$$

Par conséquent, on en déduit donc que :

$$Vgs1 = n \times Ut \times \ln(\frac{I1}{Is1})$$

(avec n= 1 ou 2 suivant la technologie.)

$$Vgs2 = n \times Ut \times \ln(\frac{I2/N}{Is2}).$$

On obtient donc :

$$V1 = Vgs2 - Vgs1 = n \times Ut \times (\ln\left(\frac{\frac{I2}{N}}{Is2}\right) - \ln\left(\frac{I1}{Is1}\right)) = n \times Ut \times \ln((I2/N)/$$

$$Is2) \times (Is1/I1))$$

Sachant qu'au point de commutation I1=I2 et Is1 = Is2, on obtient alors :

$$Vref = V1 = n \times Ut \times \ln(1/N) \text{ avec } Ut = (k \times T)/q$$

Or, si N est supérieur à 1, 1/N est inférieur à 1. De ce fait, ln(1/N) est égal à -ln(N). On comprend donc par-là que la tension V1 dont la valeur est Vref est négative et le circuit de détection de chocs 7 est ainsi apte à mesurer une tension en dessous de 0V.

Selon la position du sélecteur, la valeur Vcomp de la tension Vmot est modifiée par l'unité de calcul 5 comme visible à la figure 6. La tension comparée Vcomp se calculant, au point de commutation, de la façon suivante :

Si le sélecteur est en position p1, la tension Vcomp est égale à la tension V1.
Si le sélecteur est en position p2, la tension Vcomp est égale à :

$$Vcomp = Vref \times \left(\frac{R1+R2+R3+R4}{R2+R3+R4}\right)$$

Si le sélecteur est en position p3, la tension Vcomp est égale à :

$$Vcomp = Vref \times \left(\frac{R1+R2+R3+R4}{R3+R4}\right)$$

Si le sélecteur est en position p4, la tension Vcomp est égale à :

$$Vcomp = Vref \times \left(\frac{R1+R2+R3+R4}{R4}\right)$$

Par conséquent, la tension au point de sélection P4 est plus importante que la tension au point de sélection P1.

A titre d'exemple, les résistances pourraient avoir les valeurs suivantes :R1=5000 Ohms, R2=3000 Ohms, R3=2000 Ohms et R4=1000 Ohms. On obtient alors Vcomp variant de V1 à 11 xV1.

Ces valeurs de Vref et de Vcomp sont alors considérées comme des valeurs de référence.

La valeur de la tension induite dépend du type de moteur, de l'intensité et de la durée du choc. Le but de ce système est de mesurer des tensions induites entre 50 mV peak-peak et ~500mV peak-peak.

Dans une variante visible aux figures 2 et 6, chaque borne Mot1, Mot2 du moteur présente un circuit de détection de chocs 7. Cette variante permet ainsi la détection de chocs horaire ou antihoraire.

Soit l'exemple de la figure 4 dans laquelle chaque borne Mot1, Mot2 du moteur présente un circuit de détection de chocs, chaque détecteur étant configuré avec une tension de référence négative.

Lors d'un choc Sh1 appliqué sur le moteur, une tension induite est générée par le mouvement du rotor du moteur 4, la valeur de la tension Vmot augmente donc.

Sur la figure 4, on constate que le choc Sh1 entraîne l'apparition d'une tension induite positive au niveau de la borne Mot1 et l'apparition d'une tension induite négative au niveau de la borne Mot2. On en déduit donc que le choc est horaire.

La tension induite détectée au niveau de la borne Mot1 et la tension détectée au niveau de la borne Mot2 sont comparées à la tension de référence négative. On remarque dans le cas de la figure 4, que la tension induite détectée au niveau de la borne Mot2 dépasse le seuil de référence c'est-à-dire qu'elle est plus importante que la tension de référence négative. On comprend alors ici que la valeur de la tension V1 devient plus négative que la valeur Vref de la tension V1 et que la valeur de la tension Vmot devient plus négative que la valeur Vmot. Dans ce cas, la sortie digitale du comparateur Sh_out1 passe à 1 indiquant alors la présence d'un choc. Cette information est envoyée à l'unité de calcul 5 qui va agir en conséquence, par exemple en envoyant une impulsion de blocage pour stopper la rotation du rotor. Au contraire, si la valeur de la tension V1 ne devient pas plus négative que la valeur Vref de la tension V1, la valeur de la tension Vmot ne devient pas plus négative que la valeur Vmot, la sortie digitale du comparateur reste à 0

On comprendra que le seuil de référence c'est-à-dire la tension de référence pourra également être positive. De cette façon, un choc horaire sera détecté via la borne Mot1 alors qu'un choc antihoraire sera détecté sur la borne Mot2.

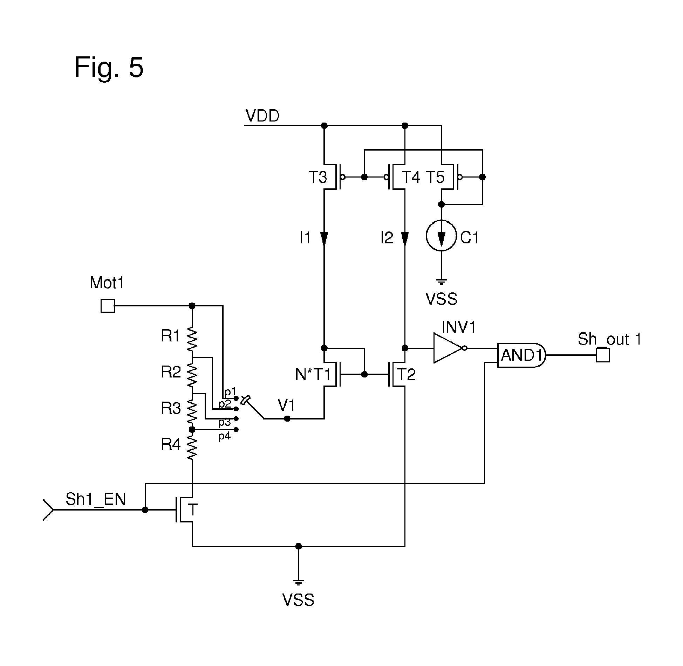

Dans ce cas-là, le comparateur visible à la figure 5 est digitalement inversé de sorte que si la valeur de la tension V1 devient plus positive que la valeur Vref de la tension V1, la valeur de la tension Vmot devient plus positive que la valeur Vmot permettant à la sortie Sh_out2 du comparateur de passer à 1.

On constate donc à la figure 5 que la partie de comparaison 72 comprend en outre un inverseur INV1 placé entre le transistor T2 et la porte ET appelée AND1. De plus, ce circuit de détection 7 avec seuil de référence positif se distingue en ayant le transistor T1 composé d'une multitude de transistor connectés en parallèle alors que le transistor T2 est unique.

La présente invention permet donc la détection de niveaux positifs ou négatifs.

On comprendra que diverses modifications et / ou améliorations évidentes pour l'homme du métier peuvent être apportées aux différents modes de réalisation de l'invention décrits dans la présente description sans sortir du cadre de l'invention.

## Revendications

1.  Dispositif électronique (1) comprenant une unité de calcul (5) capable de générer un signal représentatif d'une grandeur physique, d'un moteur (4) entraînant un dispositif d'affichage, ledit moteur comprenant deux bornes (Mot1, Mot2), positive et négative, par lesquelles l'unité de calcul le commande, le dispositif électronique comprenant en outre au moins un circuit de détection de chocs (7) connecté entre l'unité de calcul et une borne du moteur pour la détection d'un choc externe appliqué au moteur, **caractérisé en ce que** le circuit de détection de chocs comprend une partie comparaison (72) pour comparer une tension induite (Vmot) générée au niveau du moteur suite à un choc à une tension de référence prédéterminée (Vref) afin de déterminer un choc, le circuit de détection comprenant en outre une partie de sélection (72) afin de faire varier la tension induite pour améliorer la sensibilité dudit circuit détecteur de chocs.

2.  Dispositif électronique selon la revendication 1, **caractérisé en ce que** le dispositif électronique comprend deux circuits de détection de chocs (7) connectés chacun entre l'unité de calcul (5) et une borne du moteur pour la détection d'un choc externe appliqué au moteur, un circuit de détection de chocs (7) étant connecté à la borne positive (Mot1) alors que l'autre est connecté à la borne négative (Mot2).

3.  Dispositif électronique selon les revendications 1 ou 2, caractérisé en que la partie de comparaison comprend un comparateur (72b) munie d'une entrée positive et d'une entrée négative, la partie de sélection (71) comprenant une série de résistance (Ri) connectées en série, la première de ces résistances étant connectée à la borne de connexion du moteur (Mot1, Mot2) alors que la dernière résistance de la série est connectée à la masse (Vss), la partie de sélection comprenant en outre un sélecteur (71 a) comportant une sortie (V1) reliée à l'entrée positive de la partie comparaison et une pluralité de points de sélection (pi), chacun étant associé à une résistance Ri.

4.  Dispositif électronique selon la revendication 3, caractérisé en que la partie de sélection comprend en outre un transistor d'activation (T) en série de la série de résistance (Ri) permettant l'activation ou la désactivation dudit circuit de détection de chocs

5.  Dispositif électronique selon la revendication 3, caractérisé en que la tension de référence prédéterminée (Vref) est connectée à la borne négative de la partie comparaison.

6.  Dispositif électronique selon l'une des revendications 3 à 5, caractérisé en que la tension de référence prédéterminée (Vref) est négative ou positive.

7.  Dispositif électronique selon l'une des revendications 3 à 6, caractérisé en que la partie comparaison comporte une première parie (T3, T1) et une seconde paire (T4, T2) de transistors montés en série, chaque paire comprenant un transistor de type P et un transistor de type N, les grilles de des transistors de même type étant reliées ensembles, les grilles des transistors de type P étant connectées à une source de courant (C1), la grille du transistor (T1) de type N de la première paire étant connectée à son drain, les drains des transistors (T3, T4) de type P étant connectés à une tension d'alimentation (Vdd), la source du transistor (T1) de type N de la première paire étant connectée à la sortie de la partie de sélection alors que le drain du transistor (T2) de type N de la seconde paire est connecté à la masse.

# Fig. 1

# Fig. 4

Fig. 2

Fig. 3

Fig. 5

# Fig. 6

Europäisches
Patentamt

European
Patent Office

Office européen
des brevets

## RAPPORT DE RECHERCHE EUROPEENNE

Numéro de la demande

EP 14 18 3786

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 426 999 A1 (SEIKO INSTR & ELECTRONICS [JP]) 21 décembre 1979 (1979-12-21) * page 5, ligne 1-12; figures 4,9 * * page 11, ligne 15-25 * ----- | 1-7 | INV. G04C3/14 H02P8/02 |
| X | US 2014/239874 A1 (INOUE SHIGEYUKI [JP]) 28 août 2014 (2014-08-28) * alinéas [0059] - [0069]; figure 1 * ----- | 1,2 | |
| A | EP 1 693 720 A1 (CITIZEN WATCH CO LTD [JP] CITIZEN HOLDINGS CO LTD [JP]) 23 août 2006 (2006-08-23) * alinéa [0035]; figure 1 * ----- | 1-7 | |
| A | EP 2 249 214 A1 (CITIZEN WATCH CO LTD [JP]) 10 novembre 2010 (2010-11-10) * alinéa [0038]; figure 1 * ----- | 1-7 | |

**DOMAINES TECHNIQUES RECHERCHES (IPC)**

G04C
H02P

Le présent rapport a été établi pour toutes les revendications

| Lieu de la recherche | Date d'achèvement de la recherche | Examinateur |
|---|---|---|
| La Haye | 10 juin 2015 | Mérimèche, Habib |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 14 18 3786

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-06-2015

| Document brevet cité au rapport de recherche | | Date de publication | Membre(s) de la famille de brevet(s) | | Date de publication |
|---|---|---|---|---|---|
| FR 2426999 | A1 | 21-12-1979 | CH | 634964 A | 15-03-1983 |
| | | | DE | 2920894 A1 | 29-11-1979 |
| | | | FR | 2426999 A1 | 21-12-1979 |
| | | | GB | 2023891 A | 03-01-1980 |
| | | | JP | S6120821 B2 | 23-05-1986 |
| | | | JP | S54155079 A | 06-12-1979 |
| | | | US | 4321519 A | 23-03-1982 |
| US 2014239874 | A1 | 28-08-2014 | JP | 2014168326 A | 11-09-2014 |
| | | | US | 2014239874 A1 | 28-08-2014 |
| EP 1693720 | A1 | 23-08-2006 | CN | 1886703 A | 27-12-2006 |
| | | | EP | 1693720 A1 | 23-08-2006 |
| | | | JP | 4751573 B2 | 17-08-2011 |
| | | | JP | 2005172677 A | 30-06-2005 |
| | | | US | 2007115760 A1 | 24-05-2007 |
| | | | WO | 2005057298 A1 | 23-06-2005 |
| EP 2249214 | A1 | 10-11-2010 | CN | 101971108 A | 09-02-2011 |
| | | | EP | 2249214 A1 | 10-11-2010 |
| | | | HK | 1148357 A1 | 30-11-2012 |
| | | | JP | 5209041 B2 | 12-06-2013 |
| | | | US | 2011013494 A1 | 20-01-2011 |
| | | | WO | 2009110602 A1 | 11-09-2009 |

EPO FORM P0460

Pour tout renseignement concernant cette annexe : voir Journal Officiel de l'Office européen des brevets, No.12/82